**Europäisches Patentamt**

**European Patent Office**

**Office européen des brevets**

(11) Veröffentlichungsnummer: **0 027 188**
**B1**

(12) # EUROPÄISCHE PATENTSCHRIFT

(45) Veröffentlichungstag der Patentschrift:
04.04.84

(51) Int. Cl.³: **H 04 M 1/10**

(21) Anmeldenummer: **80105710.0**

(22) Anmeldetag: **23.09.80**

(54) Gabelumschalter für fernmeldetechnische Geräte.

(30) Priorität: **11.10.79 DE 2941220**

(43) Veröffentlichungstag der Anmeldung:
**22.04.81 Patentblatt 81/16**

(45) Bekanntmachung des Hinweises auf die Patenterteilung:
**04.04.84 Patentblatt 84/14**

(84) Benannte Vertragsstaaten:
**GB IT NL**

(56) Entgegenhaltungen:
**CH - A - 231 797**
**DE - B - 1 214 735**

**Münzfernsprechgerät M69, 1195012, Ausgabe II/71**

(73) Patentinhaber: **KRONE GmbH, Goerzallee 311,
D-1000 Berlin 37 (DE)**

(72) Erfinder: **Laborge, Siegfried, Dipl.-Phys.,
Attilastrasse 98, D-1000 Berlin 46 (DE)**
Erfinder: **Klein, Klaus, Neudecker Weg 99,
D-1000 Berlin 47 (DE)**

(74) Vertreter: **Patentanwälte Beetz sen. - Beetz jun. Timpe -
Siegfried - Schmitt-Fumian, Steinsdorfstrasse 10,
D-8000 München 22 (DE)**

EP 0 027 188 B1

Gabelumschalter für fernmeldetechnische Geräte

Die Erfindung betrifft einen Gabelumschalter für fernmeldetechnische Geräte mit einem wenigstens einen Magneten enthaltenden Handapparat und einem Gehäuse aus nicht-magnetischem Material, auf das der Handapparat an einer vorgegebenen Stelle auflegbar ist und das wenigstens einen bei aufgelegtem Handapparat im Einflußbereich von dessen Magneten liegenden Reed-Kontakt enthält.

Über die hergebrachte Möglichkeit, die für einen Gabelumschalter geforderte Schaltfolge durch Betätigung mechanischer Teile beim Auflegen oder Abheben des Handapparates zu realisieren, hinaus ist es aus der DE-B-1 214 735 bekannt, die Kontaktfedersätze eines Gabelumschalters mit Hilfe eines Dauermagneten zu betätigen, der Teil eines der im Handapparat angeordneten akustischen Wandler ist. Dabei sind die Kontaktfedersätze des Gabelumschalters als Schutzrohrkontakte ausgebildet, die unmittelbar die Gabelumschalterfunktionen übernehmen. Diese bekannte Ausführung eines Gabelumschalters kommt zwar dank der magnetischen Kopplung zwischen Handapparat und Kontaktfedersätzen ohne zeitaufwendige Justierarbeiten an mechanisch betätigten Folgekontakten aus, sie ist aber für die Kontaktsteuerung an eine mechanische Bewegung des Handapparats gebunden.

Der Erfindung liegt die Aufgabe zugrunde, einen Gabelumschalter der eingangs erwähnten Art so auszubilden, daß er eine Auslösung der Gabelumschalterfunktion auch ohne Bewegung des Handapparats zuläßt.

Die gestellte Aufgabe wird gemäß der Erfindung dadurch gelöst, daß mit dem oder den Reed-Kontakten im Gehäuse zwei Relais gekoppelt sind, die in Zusammenwirken mit dem oder den Reed-Kontakt(en) die für ein Gabelumschalter geforderte Schaltfolge gewährleisten.

Die erfindungsgemäße Gabelumschalterausbildung ermöglicht eine einfache Mitsteuerung weiterer Bauelemente über logische Verknüpfungen und außerdem eine Ausnutzung der Reed-Kontakte zur Steuerung weiterer Funktionen. Insbesondere kann der Kontakt einer WAH-Taste für eine Wahl bei aufgelegtem Handapparat mitgesteuert werden. Die Durchführung der Gabelumschalterfunktion erfolgt über die Relais, während die Reed-Kontakte lediglich Steuerkontakte für eine direkte oder eine indirekte Relaissteuerung sind.

Vorteilhafte Weiterbildungen der Erfindung ergeben sich aus den Unteransprüchen.

In der Zeichnung sind Ausführungsbeispiele dargestellt. Es zeigt

Fig. 1 den Hörmuschelteil eines Handapparates und einen Teil des Apparategehäuses im Schnitt, und

Fig. 2 einen Fernsprechapparat in Vorderansicht, wobei im Handapparat Magnete und im Apparategehäuse Reed-Kontakte durch eine Schnittdarstellung sichtbar werden.

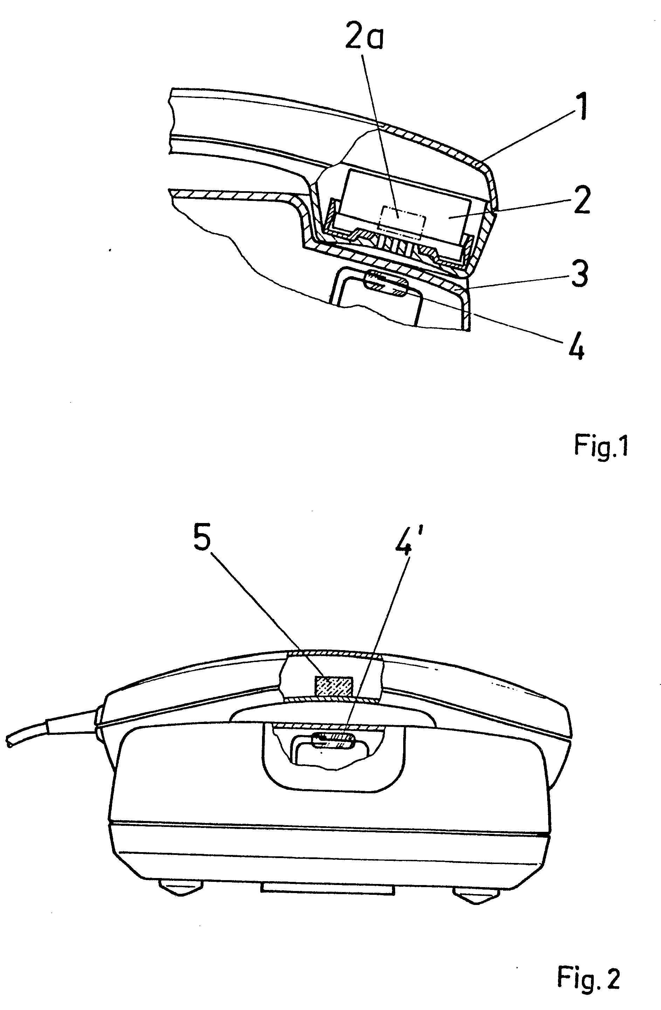

Wie die Fig. 1 und 2 zeigen, werden die im Apparategehäuse 3 befindlichen Reed-Kontakte 4, 4' entweder von einem in der Hörkapsel 2 befindlichen Hörkapselmagneten 2a oder von einem gesonderten, im Handapparat 1 eingebauten Magneten 5 gesteuert.

Durch vorteilhafte Verwendung von Reed-Ruhe- bzw. Umschaltkontakten ist es möglich, daß die elektronische Gabelumschalter-Steuerung (nicht dargestellt) nur in Betrieb Strom benötigt und im Ruhezustand einen hochohmigen Widerstand aufweist.

Die Schaltfolge wird durch Verwendung zweier Relais oder anderer Schaltelemente, die elektronisch in Folge gesteuert werden, realisiert. Hierdurch sind erfindungsgemäß einfache elektronische logische Verknüpfungen zur Inbetriebnahme des Handapparates, wie z. B. Wahl bei aufgelegtem Handapparat und/oder Freisprechen, möglich.

Um eine beliebige Position des aufgelegten Handapparates 1 zu erlauben, befinden sich für das Ausführungsbeispiel mit der Steuerung durch den Hörkapsel-Magneten 2a die Reed-Kontakte 4 im Apparategehäuse 3 sowohl unterhalb der Hör- und der Sprechmuschel. Durch eine elektrische Reihenschaltung wird gewährleistet, daß der Hörkapselmagnet im aufgelegten Zustand des Handapparates den Stromkreis durch den einen oder den anderen Reed-Umschaltkontakt unterbricht.

**Patentansprüche**

1. Gabelumschalter für fernmeldetechnische Geräte mit einem wenigstens einen Magneten (2a; 5) enthaltenden Handapparat (1) und einem Gehäuse (3) aus nicht magnetischem Material, auf das der Handapparat an einer vorgegebenen Stelle auflegbar ist und das wenigstens einen bei aufgelegtem Handapparat im Einflußbereich von dessen Magneten liegenden Reed-Kontakt (4; 4') enthält, dadurch gekennzeichnet, daß mit dem oder den Reed-Kontakten (4; 4') im Gehäuse (3) zwei Relais gekoppelt sind, die in Zusammenwirken mit dem oder den Reed-Kontakt(en) die für den Gabelumschalter geforderte Schaltfolge gewährleisten.

2. Gabelumschalter nach Anspruch 1, dadurch gekennzeichnet, daß als Magnet im Handapparat (1) dessen Hörkapselmagnet (2a) dient und im Gehäuse (3) unterhalb der Auflagestelle sowohl für die Sprechmuschel als auch für die Hörmuschel des Handapparates je einer von zwei Reed-Kontakten (4) angeordnet ist, die elektrisch in Serie zueinander liegen.

3. Gabelumschalter nach Anspruch 1, dadurch gekennzeichnet, daß der Magnet (5) im Handapparat (1) in dessen mittlerem Teil angeordnet ist und im Gehäuse (3) ein Reed-Kontakt (4') zwischen der Auflagestelle für die Sprechmuschel des Handapparates und der Auflagestelle für die Hörmuschel des Handapparates liegt.

4. Gabelumschalter nach einem der Ansprüche 1 bis 3, dadurch gekennzeichnet, daß die Reed-Kontakte (4; 4') im Gehäuse (3) Ruhe- bzw. Umschaltkontakte sind.

## Claims

1. A cradle switch for communications apparatus, comprising a handset (1) including at least one magnet (2a; 5) and a housing (3) of non-magnetic material onto which the handset is adapted to be placed at a predetermined location and which includes at least one dry-reed contact (4; 4') which, when the handset is replaced, is in the range of influence of the magnet thereof, characterized in that to the dry-reed contact(s) (4; 4') within the housing (3) two relays are coupled which cooperate with the dry-reed contact(s) to ensure the switching sequence required for the cradle switch.

2. A cradle switch as claimed in claim 1, characterized in that as the magnet within the handset (1) the earphone magnet (2a) thereof is used and that within the housing (3) beneath the replacing location for both the microphone capsule and the earphone of the handset a respective one of two dry-reed contacts (4) is disposed, said dry-reed contacts being electrically connected in series.

3. A cradle switch as claimed in claim 1, characterized in that the magnet (5) inside the handset (1) is disposed in the central part thereof and that within the housing (3) a dry-reed contact (4') is disposed between the replacement location for the microphone capsule of the handset and the replacement location for the earphone of the handset.

4. A cradle switch as claimed in any of the claims 1 to 3, characterized in that the dry-reed contacts (4; 4') within the housing (3) are normally-closed or switching contacts, respectively.

## Revendications

1. Fourche interruptrice pour appareils de télécommunication comprenant un combiné (1) avec au moins un aimant (2a; 5) et un boîtier (3) en matériau non magnétique sur lequel le combiné est posable à un emplacement prédéterminé, et qui comprend au moins un contact reed (4; 4') se trouvant dans la sphère d'influence de l'aimant du combiné lorsque celui-ci est reposé, caractérisée en ce que dans le boîtier (3) deux relais sont couplés avec le ou les contact(s) reed (4; 4'), qui pour la fourche interruptrice assure(nt) en agissant ensemble avec le ou les contact(s) reed la séquence de la communication demandée.

2. Fourche interruptrice selon la revendication 1, caractérisée en ce que l'aimant (2a) du récepteur du combiné (1) sert comme aimant dans celui-ci, et dans le boîtier (3) au-dessous de l'emplacement de repos aussi bien pour le transmetteur que pour l'écouteur est placé respectivement un des deux contacts reed (4), étant reliés électriquement en série l'un avec l'autre.

3. Fourche interruptrice selon la revendication 1, caractérisée en ce que l'aimant (5) dans le combiné (1) est placé dans sa partie centrale et dans le boîtier (3) un contact reed (4') se trouve entre l'emplacement de repos pour le transmetteur du combiné et l'emplacement de repos pour l'écouteur du combiné.

4. Fourche interruptrice selon l'une quelconque des revendications 1 à 3, caractérisée en ce que les contacts reed (4; 4') dans le boîtier (3) sont respectivement des contacts de repos ou des contacts à permutation.

Fig.1

Fig. 2